## Europäisches Patentamt
## European Patent Office
## Office européen des brevets

(19)

(11) Veröffentlichungsnummer: **0 077 497**
**B1**

(12)

# EUROPÄISCHE PATENTSCHRIFT

(45) Veröffentlichungstag der Paten schrift:
**13.02.85**

(21) Anmeldenummer: **82109290.5**

(22) Anmeldetag: **07.10.82**

(51) Int. Cl.⁴: **B 27 K 3/38**, B 27 K 3/50

(54) **Holzschutzmittel.**

(30) Priorität: **20.10.81 DE 3141505**

(43) Veröffentlichungstag der Anmeldung:
**27.04.83 Patentblatt 83/17**

(45) Bekanntmachung des Hinweises auf die Patenterteilung:
**13.02.85 Patentblatt 85/7**

(84) Benannte Vertragsstaaten:
**AT BE CH DE FR GB IT LI NL SE**

(56) Entgegenhaltungen:
**EP - A - 0 014 443**
**DE - A - 1 792 688**
**DE - A - 2 040 069**

(73) Patentinhaber: **Dr. Wolman GmbH,**
**Dr.-Wolman-Strasse 31-33, D-7573 Sinzheim (DE)**

(72) Erfinder: **Marx, Hans-Norbert, Mozartweg 8,**
**D-7580 Buehl-Weitenung (DE)**

(74) Vertreter: **Schweiss, Werner, Dr. et al,**
**Carl-Bosch-Strasse 38, D-6700 Ludwigshafen (DE)**

**Beschreibung**

Die vorliegende Erfindung betrifft ein Holzschutzmittel, das 2-(Methoxycarbonylamino)-benzimidazol und ein Maleinsäureadditionsprodukt enthält, sowie Verfahren zur Behandlung von Holz mit diesem Mittel. Es ist bekannt, daß 2-(Methoxycarbonylamino)-benzimidazol (Carbendazim-BCM) gegen Schimmelpilze, Moderfäule und Bläuepilze wirksam ist (DE-AS 2 040 069), aber die schlechte Löslichkeit des Wirkstoffes in den in Holzschutzmittel verwendeten Lösungsmitteln stand einem Einsatz bislang im Wege.

Es wurde nun gefunden, daß ein Holzschutzmittel, das 2-(Methoxy-carbonylamino)-benzimidazol und ein Additionsprodukt von Maleinsäureanhydrid an ein organisches Öl enthält, eine gute Wirkung hat. Der Wirkstoff BCM liegt im Holzschutzmittel in Lösung vor. Additionsprodukte von Maleinsäureanhydrid an organische Verbindungen sind bekannt (Maleinsäureaddukte). Organische Öle sind beispielsweise Polybutadienöl oder natürliche Öle, z. B. Sojaöl. Verwendet werden organische Öle, weil das Maleinsäureadditionsprodukt vorzugsweise in flüssiger öliger Form vorliegen soll. Die Maleinsäureadditionsprodukte werden beispielsweise hergestellt unter Verwendung von 5 bis 15 Gew.-% Maleinsäureanhydrid. Das Additionsprodukt von Maleinsäureanhydrid an Polybutadienöl wird bevorzugt.

Erwärmt man die Maleinsäureaddukte in Gegenwart von BCM, so löst sich dieses bei Temperaturen von 80 bis 180°C im Maleinsäureaddukt allmählich auf. Es empfiehlt sich, die Auflösung unter Inertgas, z. B. Stickstoff und unter Zusatz geringer Mengen Antioxidantien, z. B. Stickstoff und unter Zusatz geringer Mengen Antioxidantien, z. B. BHT (Di-tert.-Butylhydroxytoluol) vorzunehmen, um Oxydations- und Polymerisationsreaktionen zu unterbinden. Je nach Viskosität des Adduktes kann die Auflösung des BCM auch in Gegenwart organischer Lösungsmittel (z. B. Kohlenwasserstoffen) erfolgen. 1 bis 8% BCM sind je nach Säurezahl (Maleinsäuregehalt) im Maleinsäureaddukt löslich. Die Lösungen können mit aliphatischen und aromatischen Lösungsmitteln unbegrenzt weiter verdünnt werden.

Unter Holz sind sowohl selbst als auch Holzfolgeprodukte, z. B. Holzschnitzel, Zellstoff oder Zwischenprodukte der Papierherstellung aus Holz zu verstehen.

Der im Holzschutzmittel enthaltene Wirkstoff BCM hat die von dieser Verbindung bekannte fungizide Wirkung.

Beispiele: (MSA = Maleinsäureanhydrid)

1) BCM-Lösung

| | |
|---|---|
| Maleinsäure/Polybutadienaddukt 10% MSA-Gehalt | 94,90% |
| | (Gew.-%) |
| BCM | 5,00% |
| BHT | 0,10% |

Zur Herstellung der Lösung werden die Ausgangsstoffe zwei Stunden bei 150°C unter Stickstoff gerührt.

2) BCM-Lösung

| | |
|---|---|
| Maleinsäure/Polybutadienaddukt 15% MSA-Gehalt | 70,00% |
| Butylglykol | 24,90% |
| BCM | 5,00% |
| BHT | 0,10% |

Zur Herstellung der Lösung werden die Ausgangsstoffe drei Stunden bei 140°C unter Stickstoff gerührt.

3) BCM-Lösung

| | |
|---|---|
| Sojaöl/Maleinsäureaddukt 8% MSA-Gehalt | 95,90% |
| BCM | 4,00% |
| BHT | 0,10% |

Zur Herstellung der Lösung werden die Ausgangsstoffe vier Stunden bei 120°C unter Stickstoff gerührt.

Rezepturbeispiele für Holzschutzmittel:

4)   Imprägniergrund, bindemittelarm

| | |
|---|---|
| Lösung nach Beispiel 2 | 5,00% |
| 2,5-Dimethylfuran-3-carbonsäure-N-methoxy- | |
| cyclohexylamid | 2,00% |
| gamma-Hexachlorcyclohexan | 0,40% |
| Petroleumbenzin | 92,60% |

5)   Imprägniergrund, bindemittelhaltig

| | |
|---|---|
| Lösung nach Beispiel 1 | 5,00% |
| Aluminiumsalz des N-Cyclohexyl-N-hydroxy- | |
| diazeniumdioxids | 2,00% |
| gamma-Hexachlorcyclohexan | 0,50% |
| Alkydharz, fest | 10,00% |
| Aliphatenbenzin | 82,50% |

6)   Holzschutzlasur

| | |
|---|---|
| Lösung nach Beispiel 3 | 5,00% |
| 2,5-Dimethylfuran-3-carbonsäure-N-methoxy- | |
| cyclohexylamid | 2,00% |
| gamma-Hexachlorcyclohexan | 0,40% |
| Alkydharz, fest | 20,00% |
| Cobalt-Naphthenat | 0,50% |
| Aliphatenbenzin | 72,10% |

Das erfindungsgemäße BCM-haltige Holzschutzmittel läßt sich mit allen gebräuchlichen Fungiziden und Insektiziden kombinieren, z. B. 2,5-Dimethylfuran-3-carbonsäure-N-methoxy-cyclohexylamid, Aluminiumsalz des N-Cyclohexyl-N-hydroxydiazeniumdioxids, chlorierte Phenole, Organozinn- und Organo-Quecksilberverbindungen, Derivate des 8-Hydroxychinolins, Derivate des Phenylphenols sowie chlorierte Kohlenwasserstoffe, Pyrethroide, Carbamate, Thionophosphorsäureester.

Das erfindungsgemäße Holzschutzmittel hat aufgrund des Gehaltes an dem Maleinsäureaddukt eine schwache Bindemittelwirkung. Diese Wirkung erwies sich im Hinblick auf die Fixierung der Wirksubstanzen im Holz als günstig, d. h. die Wirkstoffe wurden besser im Holz fixiert als ohne Verwendung des Maleinsäureaddukts.

Die Holzschutzmittel können zum Schutz von Holz und Holzfolgeprodukten gegen den Angriff durch Mikroorganismen verwendet werden. Die Anwendung des Holzschutzmittels kann z. B. erfolgen durch:

a)   Besprühen des Holzes mit der Lösung
b)   Tauchen des Holzes in der Lösung
c)   Kesseldrucktränkung des Holzes
d)   Vakuumtränkung des Holzes
e)   Streichen des Holzes

Ein besonderer Vorteil des Holzschutzmittels liegt darin, daß zur Einarbeitung des BCM in die Lösung keine Zusatzstoffe erforderlich sind, welche gegebenenfalls die Eigenschaften des Holzschutzmittels nachteilig beeinflussen können.

Bei der Erarbeitung einer Rezeptur für ein Holzschutzmittel kann der Anteil an Maleinsäureaddukt im Holzschutzmittel von der bei Holzschutzmitteln üblichen Menge an Bindemittel in Abzug gebracht werden.

**Patentansprüche**

1. Holzschutzmittel, dadurch gekennzeichnet, daß es 2-(Methoxy-carbonylamino)-benzimidazol und ein Additionsprodukt von Maleinsäureanhydrid an ein organisches Öl enthält.

2. Holzschutzmittel gemäß Anspruch 1, dadurch gekennzeichnet, daß das organische Öl Polybutadienöl ist.

3. Holzschutzmittel gemäß Anspruch 1, dadurch gekennzeichnet, daß es weitere Wirkstoffe enthält.

4. Verfahren zum Schutz von Holz, dadurch gekennzeichnet, daß man das Holz mit einem Holzschutzmittel gemäß Anspruch 1 behandelt.

**0 077 497**

**Claims**

1. A wood preservative containing 2-(methoxy-carbonylamino)-benzimidazole and an adduct of maleic anhydride and an organic oil.

2. A wood preservative as claimed in claim 1, wherein the organic oil is polybutadiene oil.

3. A wood preservative as claimed in claim 1, containing further active ingredients.

4. A process for protecting wood, wherein the wood is treated with a wood preservative as claimed in claim 1.

**Revendications**

1. Produit pour la conservation du bois, caractérisé en ce qu'il contient du 2-(méthoxy-carbonylamino)-benzimidazole et un produit d'addition d'anhydride maléique sur une huile organique.

2. Produit pour la conservation du bois suivant la revendication 1, caractérisé en ce que l'huile organique est une huile polybutadiénique.

3. Produit pour la conservation du bois suivant la revendication 1, caractérisé en ce qu'il contient d'autres agents actifs supplémentaires.

4. Procédé pour conserver le bois, caractérisé en ce que l'on traite le bois avec un produit de conservation suivant la revendication 1.

4